(19) Europäisches Patentamt
European Patent Office
Office européen des brevets

(11) EP 2 179 962 A1

(12) # DEMANDE DE BREVET EUROPEEN

(43) Date de publication:
**28.04.2010 Bulletin 2010/17**

(51) Int Cl.:
***C01B 3/06*** *(2006.01)*

(21) Numéro de dépôt: **09290809.4**

(22) Date de dépôt: **22.10.2009**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**
Etats d'extension désignés:
**AL BA RS**

(30) Priorité: **24.10.2008 FR 0805914**

(71) Demandeur: **Commissariat à l'Energie Atomique**
**Bâtiment D "Le Ponant"**
**25 rue Leblanc**
**75015 Paris (FR)**

(72) Inventeurs:
- **Capron, Philippe**
  **38730 le Pin (FR)**
- **Delmas, Jérôme**
  **33700 Merignac (FR)**
- **Giacometti, Nathalie**
  **38640 Claix (FR)**
- **Rougeaux, Isabelle**
  **38140 Rives (FR)**

(74) Mandataire: **Mena, Sandra et al**
**Cabinet Orès**
**36, rue de St Pétersbourg**
**F-75008 Paris (FR)**

(54) **Système catalytique pour la génération d'hydrogène par la réaction d'hydrolyse des borohydrures métalliques**

(57) Système catalytique comportant au moins deux composants :
- un catalyseur de la réaction d'hydrolyse des borohydrures métalliques en hydrogène,
- un matériau sous forme solide dont la réaction de dissolution dans l'eau est exothermique.

EP 2 179 962 A1

**Description**

L'invention a pour objet de nouveaux systèmes catalytiques pour la production d'hydrogène par hydrolyse de borohydrures métalliques ainsi que des dispositifs de production d'hydrogène faisant appel à ces nouveaux systèmes. Plus particulièrement, l'invention concerne des systèmes catalytiques favorisant la réaction d'hydrolyse des borohydrures métalliques en hydrogène.

L'hydrogène est un combustible dit « propre », car il réagit avec l'oxygène dans des dispositifs appropriés pour donner de l'énergie électrique et de l'eau. Il est utilisé comme combustible dans certains moteurs à combustion et dans les piles à combustible. L'utilisation d'hydrogène comme combustible est donc intéressante du point de vue environnemental. Il est par conséquent souhaitable de disposer de méthodes de production d'hydrogène qui soient satisfaisantes et qui puissent être mises en oeuvre dans des dispositifs de taille réduite ou miniaturisés de façon à pouvoir intégrer cette production d'hydrogène dans des microsystèmes.

Le stockage et la production d'hydrogène *in situ* constituent le principal blocage à l'émergence des piles à combustible. L'un des systèmes les plus prometteurs pour le stockage et la production d'hydrogène utilise des composés de type borohydrure de métaux comme moyen de stockage d'hydrogène. Le borohydrure de sodium en particulier est particulièrement prometteur car il peut être facilement dissout en milieu aqueux.

On connaît, notamment par le document US-6,534,033, des catalyseurs métalliques qui permettent d'activer la réduction d'hydrures métalliques, et en particulier de borohydrures de métaux, en hydrogène, cette réaction se faisant en présence d'eau, suivant le schéma ci-dessous :

$$NaBH_4 + 2H_2O \xrightarrow[\text{catalyseur}]{} NaBO_2 + 4H_2 + \text{Energie}$$

Cette réaction est exothermique. Le borate produit est non toxique et peut être régénéré en borohydrure.

Outre le borohydrure de sodium ($NaBH_4$), d'autres hydrures métalliques peuvent être utilisés pour mettre en oeuvre cette réaction.

Les catalyseurs utilisables pour la mise en oeuvre de cette réaction et qui sont enseignés par US-6,534,033 incluent notamment les métaux allant du groupe IB au groupe VIIIB de la classification périodique des éléments, ou les composés obtenus à partir de ces métaux. On peut citer notamment le ruthénium, le cuivre, le cobalt, le fer, le nickel, le manganèse, le rhodium, le rhénium, le platine, le palladium, le chrome, l'argent, l'osmium, l'iridium.

Différents dispositifs permettant de mettre en oeuvre cette réaction ont été proposés. De façon générale un générateur d'hydrogène fonctionne suivant le principe représenté schématiquement sur la figure 1.

Une solution aqueuse de borohydrure de sodium (1.1) est injectée à partir d'un réservoir (1) dans un réacteur catalytique (2) à l'aide d'une pompe (3). Le borohydrure est hydrolysé au contact des catalyseurs présents dans le réacteur. Les produits de la réaction sont entraînés vers une chambre de séparation (4) dans laquelle l'hydrogène est séparé du borate formé. Celui-ci est ensuite récupéré dans un réservoir (5) pour être éventuellement recyclé, tandis que l'hydrogène est acheminé vers la pile à combustible (6). La demande en hydrogène est gérée en contrôlant le débit de la solution aqueuse de borohydrure métallique.

Le principal inconvénient de cette technologie réside dans la nécessité de préchauffer la solution aqueuse de borohydrure métallique. En effet, la cinétique de cette réaction, suivant la loi d'Arrhénius, est fonction de la température. Pour favoriser une vitesse de réaction élevée, il faut donc activer le système par un apport de chaleur, notamment lorsque le générateur est employé à basse température.

En outre, un facteur limitant de la réaction est la solubilité des borohydrures de départ. La solubilité du borohydrure de sodium dans l'eau n'est que de 35%, celle du produit de réaction, $NaBO_2$ n'est que de 22% à la température ambiante. Il faut donc prévoir soit d'employer une solution de borohydrure de sodium très diluée (pour éviter la précipitation du produit de la réaction), soit d'apporter de l'eau à la réaction à mesure qu'elle progresse. Mais pour maximiser la densité d'énergie du système on cherche à travailler avec des concentrations en borohydrure de sodium aussi élevées que possible. Le fait de chauffer la solution de borohydrure métallique permet d'augmenter la solubilité de celui-ci et surtout celle du produit de la réaction, et de travailler avec des solutions plus concentrées.

Une solution à ce problème est proposée dans le document US2005/0276746 : Le générateur d'hydrogène comporte un système de chauffage de la solution aqueuse. L'élément fournisseur de chauffage peut être externe, il s'agit alors d'une source de chaleur ajoutée aux dispositifs classiques. Mais cette solution présente l'inconvénient d'ajouter à l'encombrement spatial du dispositif alors que l'on cherche à avoir des générateurs d'hydrogène aussi compacts que possible. Une autre solution consiste à récupérer la chaleur produite par la réaction d'hydrolyse du borohydrure métallique pour préchauffer la solution. Dans ce dernier cas, le chauffage n'est pas disponible au démarrage du dispositif.

Aussi il subsistait le besoin de moyens permettant de faire la réaction de transformation de borohydrures métalliques en hydrogène à des concentrations en réactif élevées, de façon à avoir des rendements en hydrogène élevés avec une cinétique de réaction élevée dès la mise en route du dispositif. Et l'on souhaitait que cette réaction puisse être mise en oeuvre dans des réacteurs simples, peu encombrants, de façon à favoriser le rendement en hydrogène rapporté à l'encombrement du dispositif.
La solution à ce problème réside dans la mise au point de nouveaux systèmes catalytiques qui vont être décrits ci-dessous.
Un premier objet de l'invention consiste en un système catalytique comportant au moins deux composants :

- le premier composant est un catalyseur de la réaction d'hydrolyse des borohydrures métalliques en hydrogène,
- le second composant est un matériau dont la réaction de dissolution dans l'eau est exothermique et qui est inerte vis-à-vis des réactifs et des produits de la réaction d'hydrolyse des borohydrures métalliques en hydrogène.

Ce système catalytique est une association d'au moins deux composants, mais d'autres composants choisis dans ces deux catégories ou d'autres encore, non inclus dans ces deux familles de composants, peuvent être utilisés dans ce système catalytique. Cette association peut prendre différentes formes qui vont être détaillées ci-dessous.
Le premier composant du système catalytique de l'invention est constitué de particules métalliques ayant la propriété de catalyser la réaction d'hydrolyse des borohydrures métalliques en hydrogène. Ces particules métalliques sont constituées d'un ou de plusieurs composés choisis parmi les atomes du groupe IIIA au groupe VIIIB de la classification périodique des éléments.
Les atomes du groupe IIIA au groupe VIIIB de la classification périodique des éléments forment un groupe constitué des atomes suivants : le ruthénium, le cuivre, le cobalt, le fer, le nickel, le manganèse, le rhodium, le rhénium, le platine, le palladium, le chrome, l'argent, l'or, l'osmium, l'iridium, le scandium, le titane, le vanadium.
Préférentiellement on choisit pour le catalyseur un ou plusieurs atomes dans le groupe suivant : Pt, Ru, Pd, Co, Cr, Ni, Fe.
Les particules métalliques sont avantageusement des nanoparticules métalliques, c'est-à-dire des particules ayant une taille comprise entre 1 et 500 nm, et de préférence entre 5 et 100 nm. En effet, des particules métalliques de petite taille sont plus efficaces comme catalyseurs.
De préférence, les nanoparticules métalliques employées dans l'invention sont supportées par un substrat ayant une structure poreuse : on peut prévoir notamment que les particules métalliques soient supportées par une mousse à cellules ouvertes ou par une grille. Une telle structure peut être de nature métallique, être constituée de polymères ou de carbone. De tels matériaux sont commercialisés par les sociétés Goodfellow, Porvair, Recemat, Inco, notamment sous forme de plaques constituées de mousse de Ni d'épaisseur comprise entre 1 et 2 mm, de densité allant de 0,4 à 0,6 g/cm$^3$, de porosité supérieure à 80%, avec des tailles de pores allant de 200 à 400 $\mu$m. L'avantage d'une structure poreuse comme support du catalyseur est qu'elle offre une surface d'échange maximale entre les particules métalliques et le flux de liquide tout en évitant les chutes de pression le long du lit catalytique.
Le second composant du système catalytique de l'invention est un matériau dont la réaction de dissolution dans l'eau est exothermique et qui est inerte vis-à-vis des réactifs et des produits de la réaction d'hydrolyse des borohydrures métalliques en hydrogène. Ce matériau peut être organique ou minéral. Il est avantageusement sous forme solide, ce qui rend plus facile la préparation du système catalytique de l'invention. Ce composé lorsqu'il est mis au contact de l'eau se dissout en produisant de la chaleur, appelée chaleur de dissolution et mesurée en kJ/mol. Avantageusement, on choisit un composé ayant une chaleur de dissolution supérieure ou égale, en valeur absolue, à 20 kJ/mol.
Le tableau 1 ci-dessous illustre quelques composés qui sont utilisables dans l'invention pour leur chaleur de dissolution :

Tableau 1

| Composé | Chaleur de dissolution en kJ/mol |
|---|---|
| NaOH | -44,5 |
| KOH | -57,6 |
| LiOH | -23,6 |
| $CaCO_3$ | -23,4 |
| $CaCl_2$ | -82,9 |
| LiCl | -37 |
| CsOH | -71,6 |

(suite)

| Composé | Chaleur de dissolution en kJ/mol |
|---|---|
| $MgCl_2$ | -152 |
| $MnCl_2$ | -67 |

On peut utiliser un mélange de matériaux pour leur chaleur de dissolution. Ceux-ci doivent être inertes vis-à-vis des réactifs et des produits de la réaction d'hydrolyse des borohydrures métalliques en hydrogène. C'est-à-dire qu'ils ne doivent pas réagir avec ces réactifs et ces produits.

Le second composant du système catalytique de l'invention est associé, sous forme solide, au premier composant (le matériau catalyseur). Avantageusement le second composant du système catalytique est sous forme d'un bloc qui est placé au contact du substrat à structure poreuse. Mais on peut aussi prévoir qu'il soit sous forme de poudre et dispersé dans le substrat à structure poreuse. Ce second composant ne participe pas de façon directe à la catalyse, mais, lors de la mise en route du dispositif, lorsque la solution de borohydrure métallique est introduite dans la chambre de catalyse, le second composant du système catalytique est dissout par l'eau de la solution de borohydrure métallique et cette dissolution produit un dégagement de chaleur qui favorise le déclenchement et augmente la cinétique de la réaction de catalyse et qui favorise la solubilité du borohydrure métallique dans l'eau. Etant donné que la réaction d'hydrolyse consomme deux molécules d'eau par molécule de borohydrure métallique, l'élévation de température compense l'augmentation de la concentration en borohydrure métallique et permet de conserver l'équilibre du système réactionnel, même en travaillant aux concentrations maximales de borohydrure métallique.

Les matériaux de l'invention peuvent être préparés de différentes façons en fonction des caractéristiques propres à chacune des matières premières :

Si le catalyseur comporte un support sous forme d'une mousse ou d'une grille, celle-ci peut être découpée de façon à avoir la forme souhaitée pour son introduction dans la chambre de catalyse. Et l'on peut alors prévoir de découper un ou plusieurs orifices dans le support du catalyseur de façon à y introduire des blocs du second composant à dissolution exothermique.

Par exemple sur la figure 2 est représenté un système catalytique selon l'invention. Ce système est constitué d'une mousse métallique (2.1) ayant la forme d'un cylindre creux. Des nanoparticules métalliques (2.2) ont été greffées sur les parois de la mousse. Dans la partie (2.3) centrale, creuse, de ce cylindre on a placé un morceau (2.4), cylindrique lui aussi, du matériau à dissolution exothermique. La figure 2A est une coupe longitudinale du cylindre, la figure 2B, un grossissement de la mousse (2 .1) et la figure 2C une vue de haut du cylindre.

Mais d'autres configurations sont possibles : on peut inverser la configuration par rapport à celle de la figure 2A en incluant un cylindre de catalyseur supporté sur une mousse de polymère dans la cavité centrale d'un cylindre de matériau à dissolution exothermique. Et on peut aussi prévoir de superposer une plaque de catalyseur supporté et une plaque de matériau à dissolution exothermique.

Le composé à dissolution exothermique peut être mis sous la forme souhaitée, par exemple d'une pastille, par simple compression de la poudre ou par mélange avec un polymère approprié. Ce polymère, soluble ou non soluble dans la solution de borohydrure métallique, permet d'une part de mettre en forme le composé et d'autre part de la maintenir lors du fonctionnement du système, en contrôlant sa dissolution, de façon à éviter sa désagrégation. Il est choisi en fonction du composé à dissolution exothermique auquel il est associé et il doit être inerte vis-à-vis des réactifs et des produits de la réaction. Parmi les polymères utilisables on peut citer : le PVA et le PVDF.

Les matériaux de l'invention présentent des avantages vis-à-vis des catalyseurs de l'art antérieur :

Ce matériau permet ainsi de catalyser des réactions d'hydrolyse de borohydrures métalliques en hydrogène avec des concentrations élevées de borohydrures de métaux et avec une cinétique avantageuse dès le démarrage du système. Il en résulte une augmentation de la densité d'énergie massique du combustible.

L'invention a encore pour objet l'utilisation d'un matériau tel que décrit ci-dessus pour catalyser la réaction d'hydrolyse d'un borohydrure métallique en hydrogène suivant le schéma ci-dessous qui illustre la réaction avec $NaBH_4$ comme précurseur :

$$NaBH_4 + 2H_2O \xrightarrow[\text{catalyseur}]{} NaBO_2 + 4H_2 + \text{Energie}$$

Outre le borohydrure de sodium ($NaBH_4$), d'autres borohydrures métalliques peuvent être utilisés pour mettre en oeuvre cette réaction, comme par exemple le borohydrure de zinc ($Zn(BH_4)_2$), le borohydrure de potassium ($KBH_4$), le borohydrure de calcium ($Ca(BH_4)_2$), le borohydrure de titane ($Ti(BH_4)_3$), le borohydrure de magnésium ($Mg(BH_4)_2$),

le triméthoxyborohydrure de sodium ($NaBH(OCH_3)_3$). Et bien qu'il ne s'agisse pas d'un borohydrure métallique, on peut inclure dans la liste des hydrures utilisables comme réactif dans la réaction ci-dessus l'aminoborane ($NH_3B_3$).

La solution aqueuse contient de 1 à 60% en masse de borohydrure et préférentiellement de 20 à 40% en masse. Elle contient également une base de type MOH avec M = Na ou K afin de limiter la décomposition spontanée de la solution. La base a une concentration de 1 à 15% en masse.

L'invention a encore pour objet une chambre de catalyse permettant la mise en oeuvre d'une réaction d'hydrolyse d'un borohydrure métallique en hydrogène, cette chambre de catalyse comportant un système catalytique tel que décrit ci-dessus et étant adapté pour permettre leur utilisation : elle doit permettre un flux de réactifs entrant et sortant de la chambre tout en conservant le système catalytique de l'invention dans la chambre de réaction.

Et on peut prévoir que la chambre de catalyse comporte des moyens permettant de récupérer la chaleur de la réaction d'hydrolyse et son transfert vers le réservoir de borohydrure métallique, de telle sorte qu'une fois la réaction d'hydrolyse amorcée, cette réaction étant exothermique, elle est auto-alimentée en énergie.

L'invention a encore pour objet une pile à combustible comportant un système catalytique tel que décrit ci-dessus pour catalyser la réaction de production d'hydrogène. Et notamment une pile à combustible comportant une chambre de catalyse telle que décrite ci-dessus.

## EXEMPLE :

On utilise une mousse de nickel commercialisée par la société Goodfellow de densité 0,5 $g/cm^3$. Cette mousse est découpée afin d'obtenir des cylindres creux d'épaisseur 1,6 mm et 10 mm de diamètre externe et 4 mm de diamètre interne. Ces rondelles sont ensuite nettoyées avec une solution d'éthanol dans un bain d'ultrasons puis activées avec une solution d'acide chlorhydrique 0,1 mol/L. Chacune des mousses est ensuite immergée dans 10 mL de solution de chlorure de cobalt à 0,1 mol/L. Une solution de $NaBH_4$ (20 mL) de concentration 5% est ensuite ajoutée à la solution contenant les rondelles. La réaction de réduction du sel de cobalt se produit et engendre la formation et le dépôt de 35 mg de nanoparticules de cobalt sur la mousse de nickel.

Parallèlement, un cylindre de 4 mm de diamètre et de 10 mm de longueur est préparé par pressage d'un mélange d'hydroxyde de potassium et de 20% en masse d'acide polyacrylique sous une pression de 5 $tonnes/cm^2$ pendant 3 min à température ambiante.

Cinq rondelles sont ensuite assemblées sur le cylindre en hydroxyde de potassium par « emmanchement ».

Le système catalytique ainsi formé correspond à celui illustré sur la figure 2. Il est caractérisé grâce à un montage expérimental permettant de faire passer une solution de $NaBH_4$ de concentration massique de 10% (stabilisée avec 3% en masse de NaOH) dans l'eau. Ce montage permet d'évaluer la capacité du système vis-à-vis des conditions de démarrage de la réaction.

Sur la figure 3 on a rapporté les résultats expérimentaux obtenus avec le système catalytique de la présente invention et ceux obtenus avec un réacteur classique à une température de 10°C.

Comme on peut le constater sur cette figure, lors du démarrage de la réaction, c'est-à-dire lorsque la solution arrive, le réacteur catalytique avec le composé à dissolution exothermique présente une meilleure efficacité que le réacteur classique. Ce phénomène est d'autant plus marqué que la température est basse.

## Revendications

1. Système catalytique comportant au moins deux composants et dans lequel :

   - le premier composant est un catalyseur de la réaction d'hydrolyse des borohydrures métalliques en hydrogène,
   - le second composant est un matériau sous forme solide dont la réaction de dissolution dans l'eau est exothermique et qui est inerte vis-à-vis des réactifs et des produits de la réaction d'hydrolyse des borohydrures métalliques en hydrogène.

2. Système catalytique selon la revendication 1 dans lequel le premier composant est constitué de particules métalliques constituées d'un ou de plusieurs composés choisis parmi les atomes du groupe IIIA au groupe VIIIB de la classification périodique des éléments.

3. Système catalytique selon la revendication 2 dans lequel les atomes du groupe IIIA au groupe VIIIB sont choisis dans le groupe suivant : Pt, Ru, Pd, Co, Cr , Ni, Fe.

4. Système catalytique selon l'une des revendications 2 ou 3 dans lequel les particules métalliques ont une taille comprise entre 1 et 500 nm, et de préférence entre 5 et 100 nm.

**5.** Système catalytique selon la revendication 4 dans lequel les particules métalliques employées sont supportées par un substrat ayant une structure poreuse.

**6.** Système catalytique selon la revendication 5 dans lequel le substrat à structure poreuse est choisi parmi les mousses à cellules ouvertes et les grilles, et ce substrat peut être de nature métallique, être constitué de polymères ou de carbone.

**7.** Système catalytique selon l'une quelconque des revendications 1 à 6 dans lequel le second composant est un composé ayant une chaleur de dissolution supérieure ou égale, en valeur absolue, à 20 kJ/mol.

**8.** Système catalytique selon l'une quelconque des revendications 1 à 7 dans lequel le second composant est choisi parmi : NaOH, KOH, LiOH, $CaCO_3$, $CaCl_2$, LiCl, CsOH, $MgCl_2$, $MnCl_2$.

**9.** Système catalytique selon l'une quelconque des revendications 5 à 8 dans lequel le second composant du système catalytique est sous forme d'un bloc qui est placé au contact du substrat à structure poreuse.

**10.** Système catalytique selon l'une quelconque des revendications 5 à 9 comprenant une mousse métallique (2.1) ayant la forme d'un cylindre creux, des nanoparticules métalliques (2.2) greffées sur les parois de la mousse et dans la partie (2.3) centrale, creuse, de ce cylindre se trouve un morceau (2.4), cylindrique lui aussi, du matériau dont la réaction de dissolution dans l'eau est exothermique.

**11.** Utilisation d'un système catalytique selon l'une quelconque des revendications 1 à 10 pour catalyser la réaction d'hydrolyse d'un borohydrure métallique en hydrogène.

**12.** Utilisation selon la revendication 11 pour catalyser la réaction d'hydrolyse de $NaBH_4$ en hydrogène suivant le schéma ci-dessous :

$$NaBH_4 + 2H_2O \xrightarrow[\text{catalyseur}]{} NaBO_2 + 4H_2 + \text{Energie}$$

**13.** Chambre de catalyse permettant la mise en oeuvre d'une réaction d'hydrolyse d'un borohydrure métallique en hydrogène, cette chambre de catalyse comportant un système catalytique selon l'une quelconque des revendications 1 à 10.

**14.** Pile à combustible comportant un système catalytique selon l'une quelconque des revendications 1 à 10.

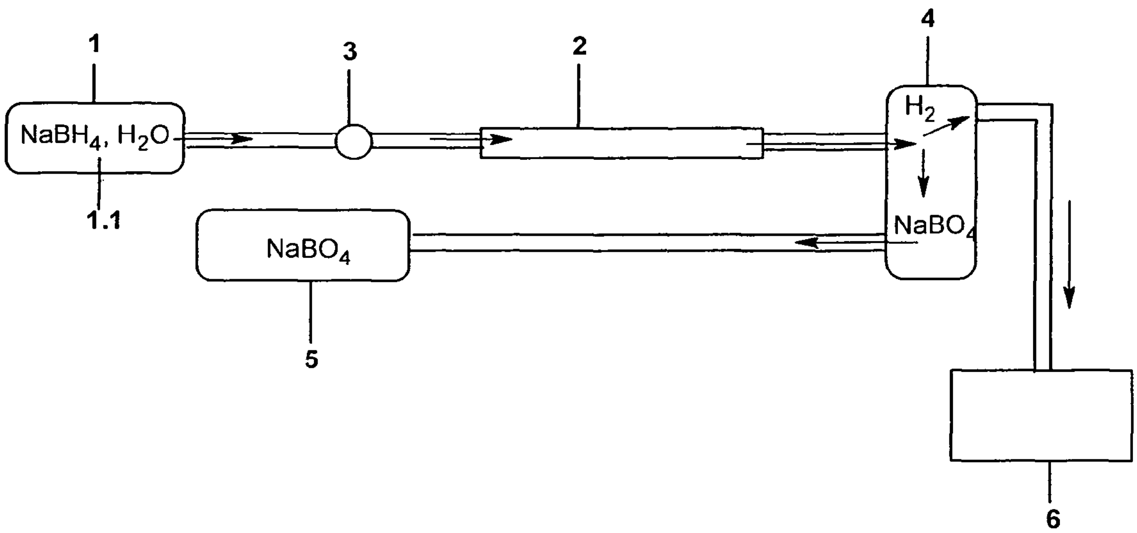


Figure 1

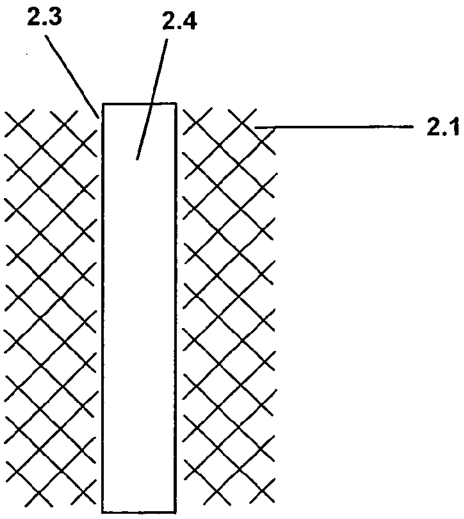


Figure 2A

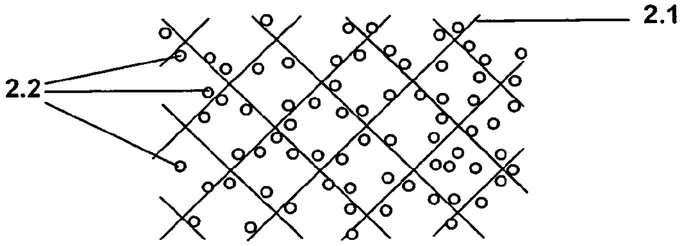


Figure 2B

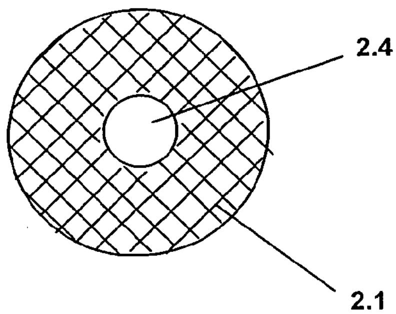


Figure 2C

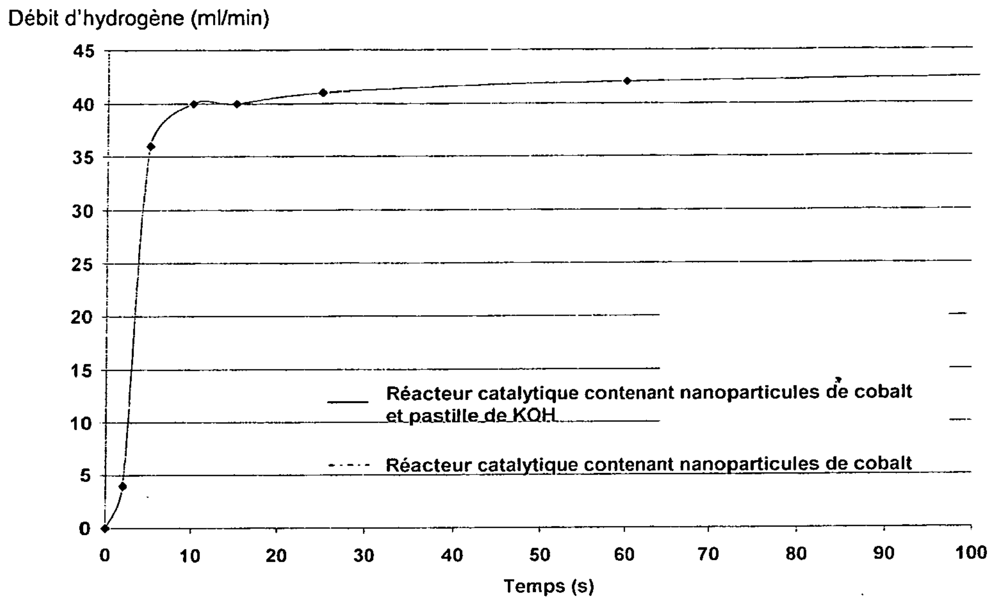
Débit d'hydrogène (ml/min)
45
40
35
30
25
20
15
10
5
0
Réacteur catalytique contenant nanoparticules de cobalt et pastille de KOH
Réacteur catalytique contenant nanoparticules de cobalt
0
10
20
30
40
50
60
70
80
90
100
Temps (s)

Figure 3

Europäisches Patentamt
European Patent Office
Office européen des brevets

# RAPPORT DE RECHERCHE EUROPEENNE

Numéro de la demande
EP 09 29 0809

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2001/045364 A1 (HOCKADAY ROBERT G [US] ET AL) 29 novembre 2001 (2001-11-29)<br>* alinéas [0020], [0102]; revendications 1,10,20,21 *<br>----- | 1-14 | INV.<br>C01B3/06 |
| X,D | US 2005/276746 A1 (ZHANG QINGLIN [US] ET AL) 15 décembre 2005 (2005-12-15)<br>* alinéas [0026], [0027], [0038]; exemple 1 *<br>----- | 1-14 | |
| X | EP 1 369 947 A (HEWLETT PACKARD DEVELOPMENT CO [US])<br>10 décembre 2003 (2003-12-10)<br>* alinéa [0030]; revendications 1-3,5,6 *<br>----- | 1-14 | |
| X | US 2007/264190 A1 (ZHANG QINGLIN [US] ET AL) 15 novembre 2007 (2007-11-15)<br>* alinéas [0026], [0035]; revendications 1,16,18,19,22,23; exemples *<br>----- | 1-14 | |
| | | | DOMAINES TECHNIQUES RECHERCHES (IPC) |
| | | | C01B |

Le présent rapport a été établi pour toutes les revendications

1

| Lieu de la recherche | Date d'achèvement de la recherche | Examinateur |
|---|---|---|
| La Haye | 10 février 2010 | Engelen, Karen |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................................................
& : membre de la même famille, document correspondant

EPO FORM 1503 03.82 (P04C02)

## ANNEXE AU RAPPORT DE RECHERCHE EUROPEENNE RELATIF A LA DEMANDE DE BREVET EUROPEEN NO.

EP 09 29 0809

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-02-2010

| Document brevet cité au rapport de recherche | Date de publication | Membre(s) de la famille de brevet(s) | Date de publication |
|---|---|---|---|
| US 2001045364 A1 | 29-11-2001 | AUCUN | |
| US 2005276746 A1 | 15-12-2005 | CN 101027247 A | 29-08-2007 |
| | | EP 1771375 A2 | 11-04-2007 |
| | | WO 2005123576 A2 | 29-12-2005 |
| EP 1369947 A | 10-12-2003 | CA 2419771 A1 | 06-12-2003 |
| | | DE 60308097 T2 | 01-03-2007 |
| | | JP 3920244 B2 | 30-05-2007 |
| | | JP 2004014515 A | 15-01-2004 |
| | | TW 288742 B | 21-10-2007 |
| | | US 2003228505 A1 | 11-12-2003 |
| US 2007264190 A1 | 15-11-2007 | WO 2007133501 A2 | 22-11-2007 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 6534033 B
- US 20050276746 A